# EUROPEAN PATENT APPLICATION

(11) **EP 2 337 348 A1**
(43) Date of publication of application: **22.06.2011**
(21) Application number: 08877405.4
(22) Date of filing: 15.10.2008
(51) Int. Cl.: H04N 7/167, H04N 7/26

(54) **ENCRYPTION DEVICE AND DECODING DEVICE, AND ENCRYPTION METHOD AND DECODING METHOD**

(71) Applicant: Mitsubishi Electric Corporation, Tokyo 100-8310 (JP)
(72) Inventor: YAMAGUCHI, Teruyoshi, Tokyo 100-8310 (JP); SATO, Tsuneo, Tokyo 100-8310 (JP)
(74) Representative: Pfenning, Meinig & Partner GbR
(86) International application number: PCT/JP2008/068634
(87) International publication number: WO 2010/044146

(57) **Abstract**

An encryption part (103) inputs a picture data packet (110) including I slice data which is used for intra-frame prediction and a processing on which starts from leading data at a time of data decompression. The encryption part (103) extracts, from the leading portion of the I slice data, data having a data size sufficiently small compared to the data size of the I slice data as a whole, and encrypts only the extracted leading data. Intra-frame prediction cannot be performed when the leading data of the I slice data is not decrypted. Therefore unauthorized decryption and reproduction of motion picture data can be prevented with encryption of a small amount of data.

## Description

### Technical Field

The present invention relates to a technique for encrypting compression encoded data which is compression encoded, and a technique for decrypting compression encoded data which is encrypted and, more particularly, to a technique for encrypting compression encoded picture data which is compression encoded, and a technique for decrypting compression encoded picture data which is encrypted.

### Background Art

Along with digitization of motion pictures such as a video or monitor image in recent years, data encryption is needed to protect the contents of the motion pictures from being viewed illegally.

A motion picture is often compressed and encoded by using intra-frame prediction and interframe prediction, e.g., MPEG (Moving Picture Experts Group) 2 or H.264.
Intra-frame prediction is compression using only information within a single frame. The information serving as the basis in intra-frame prediction is called the I (Intra) frame (or I picture).
Interframe prediction is compression using information of a preceding frame and a current frame. The information serving as the basis in interframe prediction is called the P (Predictive) frame (or P picture) or B (Bidirectionally) frame (or B picture).
The P frame or B frame is not essential in compression of a motion picture by, e.g., MPEG2 or H.264, but such a motion picture can be encoded using only the I frame.
This is determined by the tradeoff between the compression rate and the quality.
In an embedded system, for a real-time processing, not interframe prediction that takes a long computation time, but only intra-frame prediction may be employed.

In conventional encryption of a motion picture, encryption of only the I frame has been proposed (e.g., patent literature 1, patent literature 2, and patent literature 3).
Patent literature 4 describes a picture encryption method tailored for H.264.
Patent Literature 1: JP 2005-295468 A
Patent Literature 2: JP 08-163533 A
Patent Literature 3: JP 10-145773 A
Patent Literature 4: JP 2006-510308 A

### Summary of Invention

### Technical Problem

In encryption according to the method of any one of patent references 1 to 3, when a motion picture encoded using only the I frame is to be encrypted, all frame data must be encrypted, leading to a problem that large computation cost is needed for the encryption.

According to the method described in patent literature 4, a NAL unit of H.264 is divided into "header data", "intra-data", and "interdata", and the user encrypts the respective data arbitrarily.
When the "header data" is encrypted, however, unless whether the data has been encrypted is determined correctly, the H.264 decoder may cause a malfunction.
In order to prevent this, the NAL unit which stores the header data may have to be expanded, or information concerning encryption may have to be stored in a NAL unit (SEI) in which the user can set the value arbitrarily.
The former is difficult to achieve in view of standardization. The latter cannot be applied to a NAL unit that has been existing since before SEI in the time series.
When "intra-data" and "interdata" are to be encrypted, all frame data is needed to be encrypted, leading to the problem that large computation cost is required for the encryption.

It is one of the major objects of the present invention to solve the above problems. The major objects are to realize an encryption technique that can reduce the computation amount in the encryption process of compression encoded data and perform encryption quickly and reliably, and to realize a decryption technique that can reduce the computation amount in the decryption process of compression encoded data which is encrypted and perform decryption quickly and reliably.

### Solution to Problem

An encryption apparatus according to the present invention includes:
a data input part that inputs compression encoded data which has been compression encoded and a processing on which starts from a leading portion of the data at a time of data decompression; and
an encryption part that separates leading data from the compression encoded data input by the data input part, and encrypts the leading data.

The data input part inputs intra-frame prediction compression encoded data, and
the encryption part separates leading data from the intra-frame prediction compression encoded data input by the data input part, and encrypts the leading data.

The data input part inputs interframe prediction compression encoded data, and
the encryption part separates leading data from the interframe prediction compression encoded data input by the data input part, and encrypts the leading data.

The encryption part sets a data size of the leading data to be sufficiently small compared to a data size of the whole of the compression encoded data.

The encryption part
performs encryption by treating a predetermined number of bytes as a processing unit, and
sets a data size of the leading data to match the processing unit.

The encryption part separates data being a part of the compression encoded data, in addition to the leading data, and encrypts the data separated.

The encryption part can change at least either one of a position and size of data which is to be encrypted.

The encryption part
conforms to a plurality of types of encryption algorithms, and
performs encryption in accordance with an encryption algorithm specified for the compression encoded data input by the data input part.

The encryption part inserts dummy data in the data that has been encrypted.

The encryption apparatus further includes
a decrypting information generation part that generates decrypting information used for decrypting the data encrypted by the encryption part, and inserts dummy data in the decrypting information generated.

A decryption apparatus according to the present invention includes:
a data input part that inputs compression encoded data which has been compression encoded and whose leading data has been encrypted, and
a decryption part that separates the leading data from the compression encoded data input by the data input part, and decrypts the leading data.

The data input part inputs intra-frame prediction compression encoded data whose leading data has been encrypted, and
the decryption part separates the leading data from the intra-frame prediction compression encoded data input by the data input part, and decrypts the leading data.

The data input part inputs interframe prediction compression encoded data whose leading data has been encrypted, and
the encryption part separates the leading data from the interframe prediction compression encoded data input by the data input part, and encrypts the leading data.

An encryption method according to the present invention includes:
inputting compression encoded data which has been compression encoded and a processing on which starts from a leading portion of the data at a time of data decompression, and
separating leading data from the compression encoded data which is input, and encrypting the leading data
by a computer.

A decryption method according to the present invention includes:
inputting compression encoded data which has been compression encoded and whose leading data has been encrypted, and
separating the leading data from the compression encoded data which is input, and decrypting the leading data
by a computer.

### Advantageous Effects of Invention

According to the present invention, leading data is separated from compression encoded data, a processing of which starts from the leading portion of the data at a time of data decompression, and the separated leading data is encrypted. The entire compression encoded data cannot be decrypted correctly if the encrypted leading data is not decrypted. Hence, according to the present invention, unauthorized decryption and reproduction can be prevented with encryption of a small amount of data.

### Description of Embodiments

### Embodiment 1.

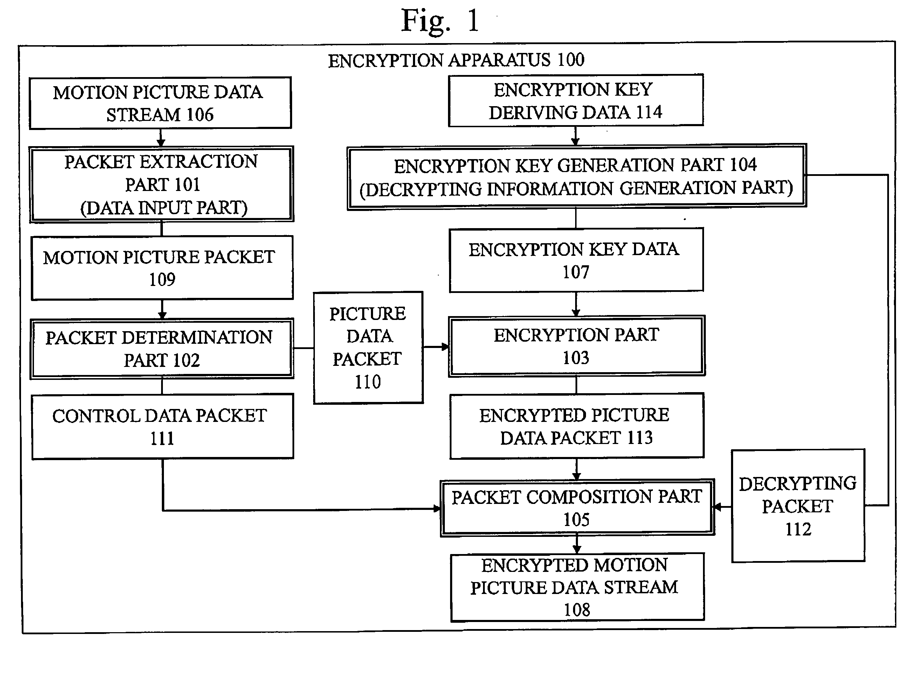

Fig. 1 is a block diagram showing a configuration of an encryption apparatus 100 according to this embodiment.
In this embodiment, an encryption apparatus 100 tailored for H.264 will be explained. The encryption apparatus 100 according to this embodiment is also applicable to other motion picture encoding methods having similar characteristics.
The operation flow of the encryption apparatus 100 as a whole will be explained by using Fig. 1.
Note that the encryption apparatus 100 shown in Fig. 1 and a decryption apparatus 500 to be described later share information such as the size and position of data to be encrypted, an encryption algorithm, and the like in advance.

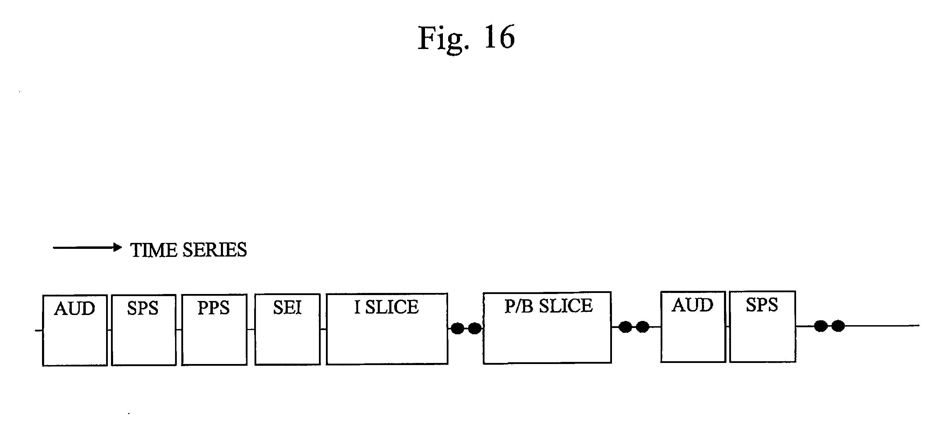

A packet extraction part 101 inputs a motion picture data stream 106.
The packet extraction part 101 decomposes the motion picture data stream 106 into packets, and outputs a motion picture packet 109.
In a case of H.264, the packet extraction part 101 decomposes the motion picture data stream 106 as the motion picture packet 109 into a control data packet 111 including AUD, SPS, PPS, and SEI, and a picture data packet 110 including I slice data, P slice data, and B slice data shown in Fig. 16.
Referring to Fig. 16, AUD indicates the leading portion of the access unit. SPS and PPS are picture parameters. SEI is a user parameter.
The I slice data is intra-frame prediction compression encoded data. The I frame is composed of one or more pieces of I slice data.
The P slice data and B slice data are both interframe prediction compression encoded data. The P frame and B frame are composed of one or more pieces of P slice data and one or more pieces of B slice data, respectively.
At a time of data decompression of the I slice data, P slice data, and B slice data, processings start from the leading portions of the respective data, and the I slice data, P slice data, and B slice data are examples of compression encoded data.
The packet extraction part 101 inputs the I slice data, P slice data, and B slice data which are examples of the compression encoded data, and is an example of a data input part.

A packet determination part 102 divides the motion picture packet 109 into the picture data packet 110 including the main body of the encoded picture data, and the control data packet 111 which stores parameters necessary for decrypting the encoded picture.
The packet determination part 102 outputs the control data packet 111 to a packet composition part 105 and the picture data packet 110 to an encryption part 103.

An encryption key generation part 104 inputs encryption key deriving data 114 and generates encryption key data 107 and a decrypting packet 112 out of the input encryption key deriving data 114.
The encryption key data 107 and decrypting packet 112 are information (decrypting information) used for decrypting the encrypted data. The encryption key generation part 104 is an example of a decrypting information generation part.

The encryption part 103 encrypts the picture data packet 110 using the encryption key data 107, and outputs an encrypted picture data packet 113.
In encryption of the picture data packet 110, the encryption part 103 separates the leading data from the compression encoded data included in the picture data packet 110, and encrypts at least the separated leading data. In other words, the encryption part 103 separates the leading data of each of the I slice data, P slice data, and B slice data, and encrypts each separated leading data. A data size of the leading data subjected to separation is sufficiently small compared to the data size of the I slice data, P slice data, or B slice data as a whole.
The encryption part 103 may encrypt only the leading data, or subsequent data in addition to the leading data. It suffices as far as the leading data is encrypted.
The encryption part 103 may encrypt the leading data of only the I slice data, without encrypting the P slice data and B slice data.

The packet composition part 105 composes the control data packet 111, encrypted picture data packet 113, and decrypting packet 112, and outputs an encrypted motion picture data stream 108.

In Fig. 1, when performing an encryption process by combination with a motion picture encoder, the packet extraction part 101 and packet determination part 102 may be omitted.
In this case, the picture data packet 110 and control data packet 111 are supplied from the motion picture encoder.

Fig. 2 shows a configuration of the encryption part 103. An operation flow of the encryption part 103 will be described.

An encrypting data extraction part 201 inputs the picture data packet 110 and generates encryption target data 207 out of the input picture data packet 110.
The encryption target data 207 is the leading n bytes of the main body of the encoded picture data in the picture data packet.
Note that n is a multiple of a constant of the processing unit (block) of an encryption processing part 202. In other words, the encryption processing part 202 performs encryption by treating a predetermined number of bytes as a processing unit. The encrypting data extraction part 201 extracts n-byte leading data corresponding to the multiple of the constant of the processing unit of the encryption processing part 202 to match the processing unit of the encryption processing part 202.
Note that n is sufficiently smaller than the data length of the picture data packet 110, as described above.
For example, suppose the processing unit of the encryption processing part 202 is 8 bytes, the encrypting data extraction part 201 extracts the leading 8 bytes (a multiple of 1 of the processing unit) of the leading 8 bytes from the picture data packet 110 as the encryption target data 207. Usually, I slice data (or P slice data or B slice data) has at least a 1-kbyte data size. Accordingly, the encryption target data 207 extracted by the encrypting data extraction part 201 is sufficiently small.
The encrypting data extraction part 201 may select, in addition to the leading n bytes of the picture data main body, encryption target data at an arbitrary position and of an arbitrary size.
In this case as well, the arbitrary size is a multiple of a constant of the processing unit (block) of the encryption processing part 202.

The encryption processing part 202 inputs the encryption key data 107 generated by the encryption key generation part 104 and encrypts the encryption target data 207 using the input encryption key data 107.
More specifically, the encryption processing part 202 encrypts the leading n-byte data of each of the I slice data, P slice data, and B slice data, and outputs encryption completed data 208.

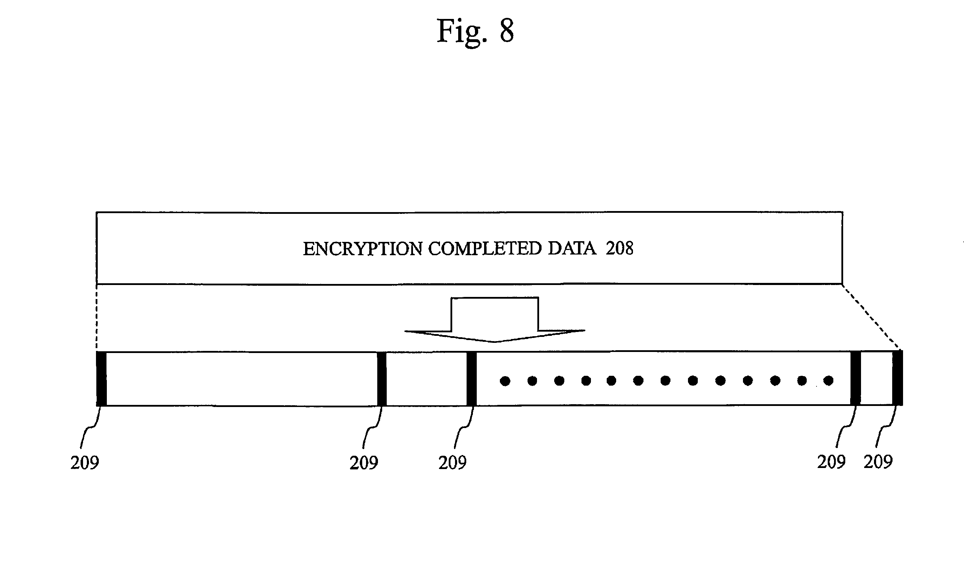

A data replacement part 203 replaces data corresponding to the encryption target data 207 in the picture data packet 110 with the encryption completed data 208 encrypted by the encryption processing part 202.
As shown in Fig. 8, during replacement, the data replacement part 203 may insert dummy data 209 at the start position and end position of the encryption completed data 208, and in between the encryption completed data 208 with constant intervals.
This can prevent an encrypted text from including a specific code (e.g., a status code) of the image data stream

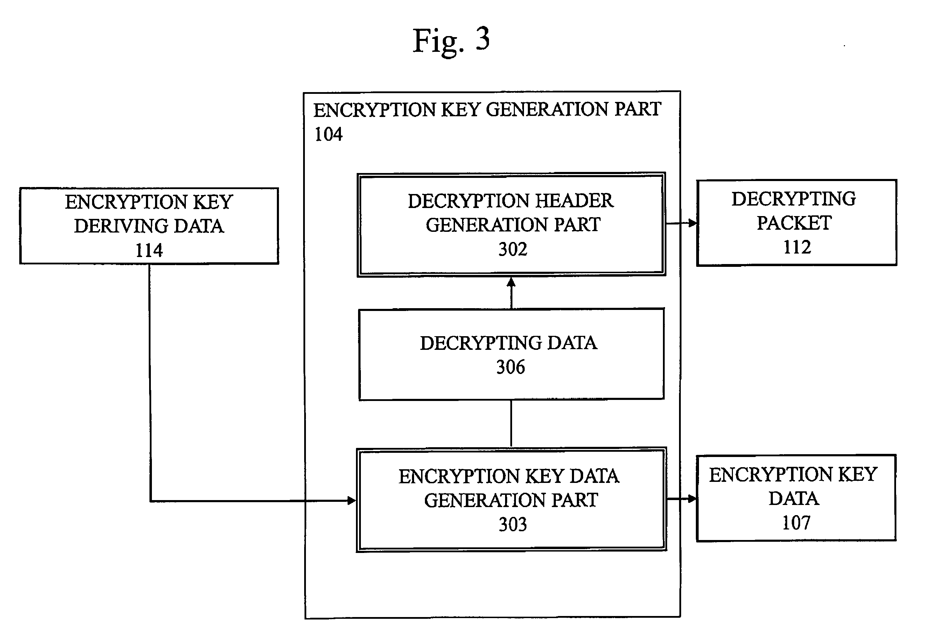

Fig. 3 shows a configuration of the encryption key generation part 104 shown in Fig. 1. The operation flow of the encryption key generation part 104 will be described.

An encryption key data generation part 303 inputs the encryption key deriving data 114 and generates the encryption key data 107 out of the encryption key deriving data 114 input.
Assume that to generate the encryption key data 107 out of the encryption key deriving data 114 is easy while to derive the encryption key deriving data 114 from the encryption key data 107 is difficult.
The encryption key data generation part 303 outputs decrypting data 306.
Note that the decrypting data 306 does not include the main body of the encryption key deriving data 114.
However, the decrypting data 306 has an information amount sufficient for generating decryption key data 512 (to be described later) out of the decrypting data 306 and decryption key deriving data 514 (to be described later).

A decryption header generation part 302 inputs the decrypting data 306 and generates the decrypting packet 112.

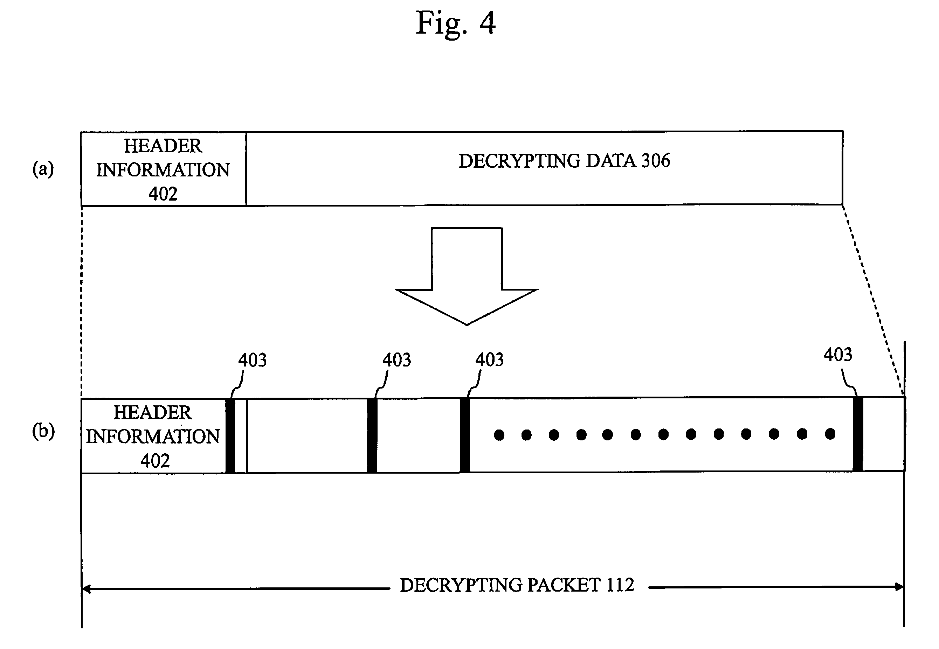

Fig. 4 shows how a decrypting packet is generated.
The decryption header generation part 302 connects decrypting data 306 to header information 402, as shown in (a) of Fig. 4.
The decryption header generation part 302 also inserts dummy data 403 into the connected information with constant intervals, as shown in (b) of Fig. 4.
In a case of H.264, a 1-byte code other than 0x00 and 0x01 is inserted as the dummy data. The resultant data after insertion is output as the decrypting packet 112.

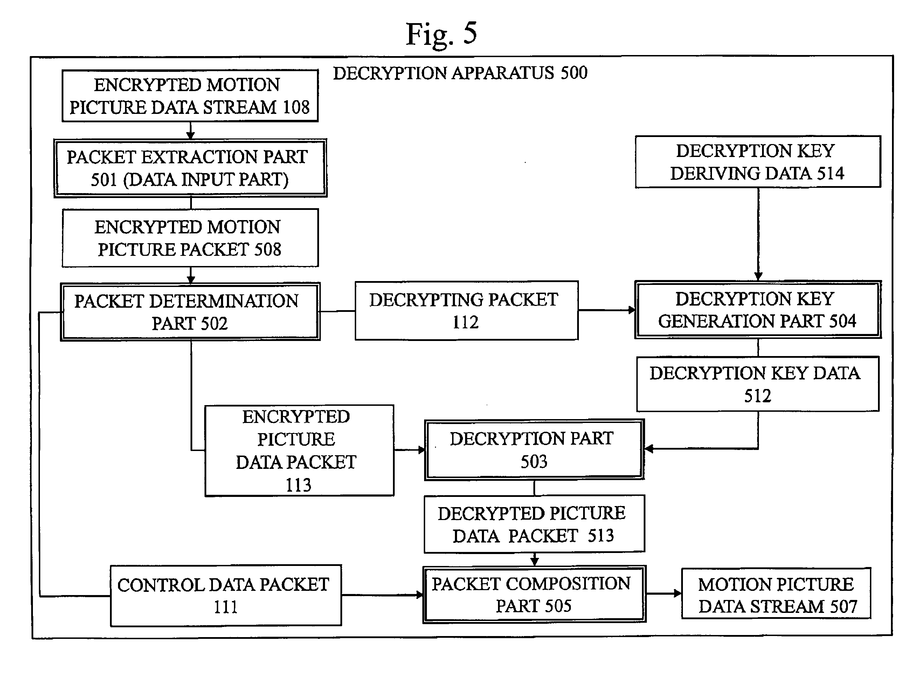

Fig. 5 shows a configuration of the decryption apparatus 500 which decrypts the encrypted motion picture stream generated in Fig. 1. The operation of the decryption apparatus 500 as a whole will be described.

A packet extraction part 501 inputs the encrypted motion picture data stream 108 and generates an encrypted motion picture packet 508 out of the input encrypted motion picture data stream 108.
The encrypted motion picture data stream 108 includes the control data packet 111 including the AUD, SPS, PPS and SEI, the encrypted picture data packet 113 including the I slice data, P slice data, and B slice data whose leading n bytes have been encrypted respectively, and the decrypting packet 112 generated by the encryption key generation part 104.
The packet extraction part 501 decomposes the encrypted motion picture data stream 108, as the encrypted motion picture packet 508, into the control data packet 111, encrypted picture data packet 113, and decrypting packet 112.
The I slice data, B slice data, and P slice data, whose leading data has been encrypted respectively, are examples of the compression encoded data whose leading data has been encrypted. The packet extraction part 501 inputs the I slice data, B slice data, and P slice data being examples of the compression encoded data whose leading data has been encrypted, and is an example of the data input part.

A packet determination part 502 divides the encrypted motion picture packet 508 into the encrypted picture data packet 113, control data packet 111, and decrypting packet 112, and outputs the control data packet 111 to a packet composition part 505, the encrypted picture data packet 113 to a decryption part 503, and the decrypting packet 112 to a decryption key generation part 504.

The decryption key generation part 504 inputs the decrypting packet 112 and decryption key deriving data 514, and generates the decryption key data 512 out of the input decrypting packet 112 and the input decryption key deriving data 514.

The decryption part 503 inputs the encrypted picture data packet 113 and decryption key data 512, and decrypts the encrypted picture data packet 113 by using the decryption key data 512, then generates a decrypted picture data packet 513.
More specifically, the decryption part 503 separates the leading n-byte data from each of the I slice data, B slice data, and P slice data in the encrypted picture data packet 113, and decrypts each leading n-byte data. The decryption part 503 then outputs the decrypted picture data packet 513 including the I slice data, B slice data, and P slice data whose leading n-byte data has been decrypted respectively.

The packet composition part 505 inputs the decrypted picture data packet 513 and control data packet 111 and generates a motion picture data stream 507 by composing the input decrypted picture data packet 513 and the input control data packet 111.

In Fig. 5, when the decrypting process is to be performed by combination with the motion picture decoder, the packet composition part 505 may be omitted.
In this case, the decrypted picture data packet 513 and control data packet 111 are provided to the motion picture decoder.

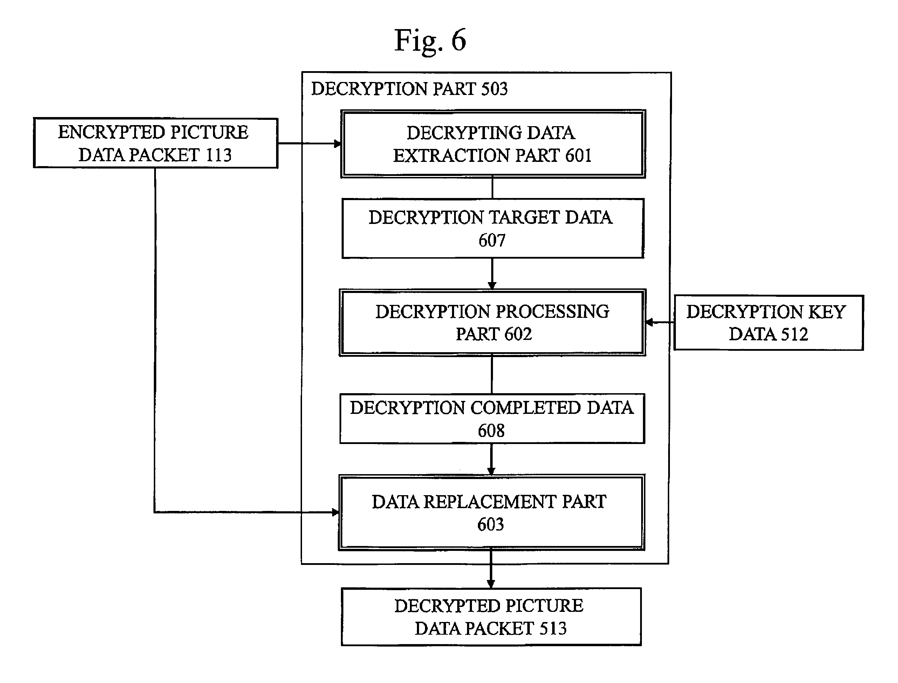

Fig 6 shows a configuration of the decryption part 503. The operation flow of the decryption part 503 will be described.

A decrypting data extraction part 601 generates decryption target data 607 out of the encrypted picture data packet 113.
The decryption target data 607 includes the leading n-byte data of each of the slice data, P slice data, and B slice data. The decrypting data extraction part 601 separates the decryption target data 607 from the encrypted picture data packet 113.
When the decryption target data 607 includes dummy data 209, the decrypting data extraction part 601 removes the dummy data 209 from the decryption target data 607.
A decryption processing part 602 decrypts the decryption target data 607 by using the decryption key data 512 and in accordance with the same encryption algorithm as that of the encryption processing part 202, then generates decryption completed data 608.
A data replacement part 603 replaces data corresponding to the decryption target data 607 in the encrypted picture data packet 113 with the decryption completed data 608.
The replacement operation is identical to that of the data replacement part 203.
Data after the replacement by the data replacement part 203 is the decrypted picture data packet 513.

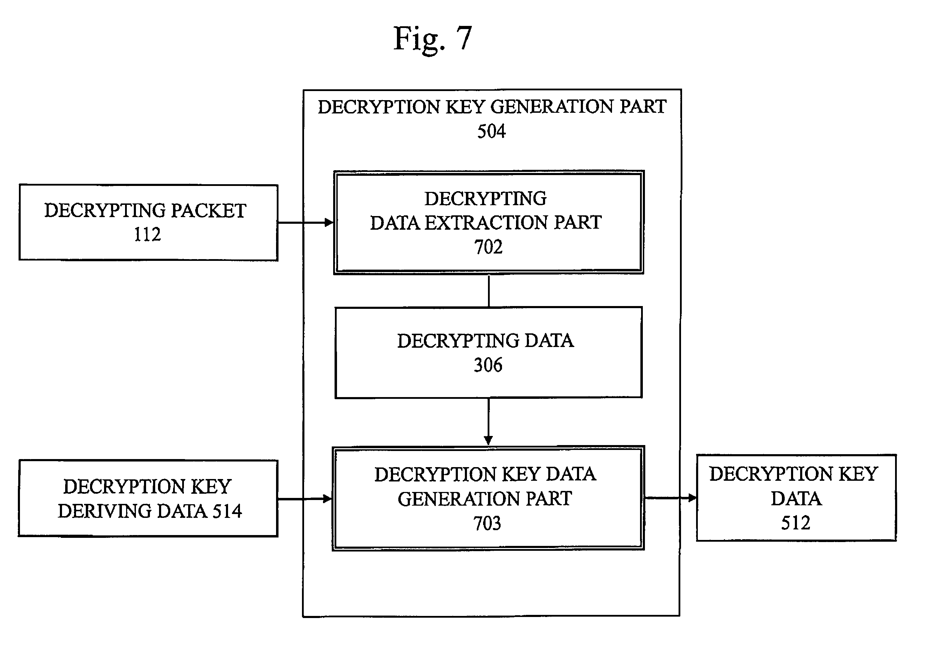

Fig. 7 shows a configuration of the decryption key generation part 504. The operation flow of the decryption key generation part 504 will be described.

A decrypting data extraction part 702 inputs the decrypting packet 112, removes header information and dummy data from the decrypting packet 112, and outputs the decrypting data 306.
A decryption key data generation part 703 inputs the decryption key deriving data 514 and decrypting data 306 and generates the decryption key data 512.

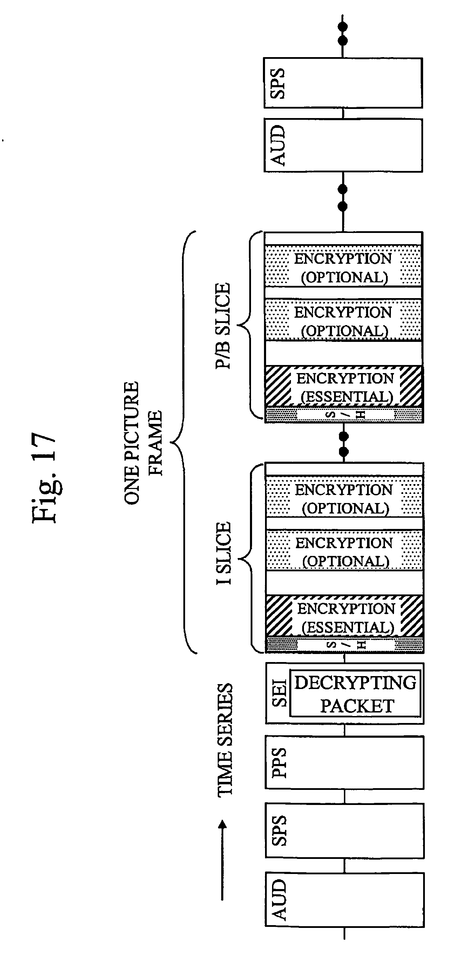

Fig. 16 shows a motion picture stream before encryption, and Fig. 17 shows a motion picture stream after encryption.
Referring to Fig. 16, the slice header (S/H) includes at least a unique word, but may also include parameters in addition to the unique word.
As described above, according to this embodiment, the leading n bytes of the main body of the encoded data in each of the intra-frame prediction compression encoded data (I slice data) and the interframe prediction compression encoded data (P slice data, B slice data) are to be encrypted. Note that the slice header (S/H) is not to be encrypted.
According to this embodiment, encryption of the leading data is essential, while the subsequent data to the leading data may be or need not be encrypted. Fig. 17 shows a case in which data other than the leading data is also encrypted.
In Fig. 17, the leading data of each of the P slice data and B slice data, in addition to the I slice data, is also encrypted. Encryption of the leading data of each of the P slice data and B slice data may be omitted. In other words, only the leading data of the I slice data may be encrypted.
The decrypting packet 112 is included in the SEI packet, as shown Fig. 17.

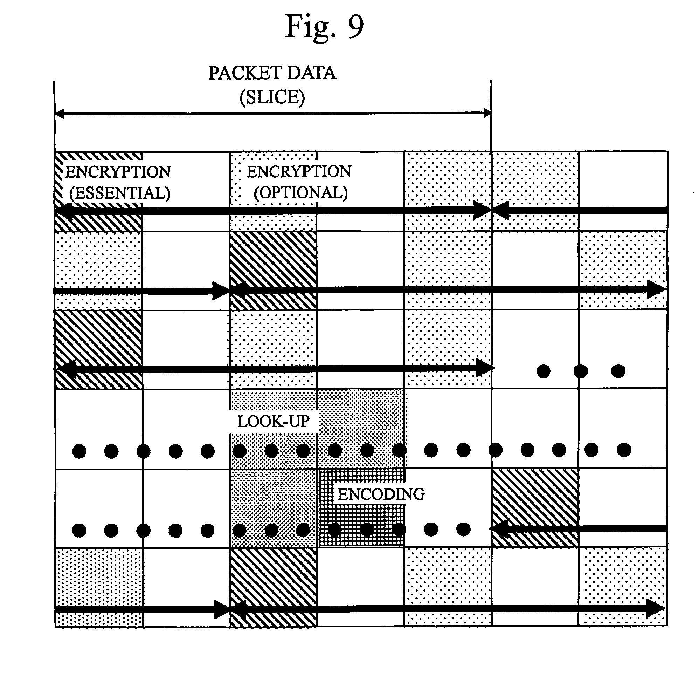

Fig. 9 shows the concept of the encrypting data from a standpoint of a frame level.
Referring to Fig. 9, a macro block marked "encryption (essential)" is a macro block to be encrypted essentially, a macro block marked "encryption (optional)" is a macro block to be encrypted optionally, a macro block marked "encoding" is a macro block to be encoded, and a macro block marked "look-up" is a macro bock to be looked up in encoding and decrypting of the macro block to be encoded.
Referring to Fig. 9, note that macro blocks hatched with the same hatching patterns have the same attributes (encryption (essential), encryption (optional), or look-up).
Arrows in Fig. 9 indicate macro blocks included in one piece of packet data (slice).

In MPEG-4 AVC/H.264, the pixel values of macro blocks on the upper portion, left portion, and upper left portion of the macro block to be encoded are looked up in intra-frame prediction.
Hence, if the values of these look-up macro blocks are not decrypted correctly, the macro block to be encoded is not decrypted correctly. Namely, in intra-frame prediction, if a leading macro block is not decrypted correctly, the entire frame cannot be decrypted correctly.
According to this embodiment, since only data including a macro block at the leading portion of the slice is encrypted, unauthorized decryption and reproduction of a motion picture can be prevented with encryption of a small amount of data.

The effect of the decryption header generation part 302 will be described.
The decrypting data 306 may include a random number. The numerical value of the random number may coincide with a specific code (e.g., a status code) of the image data stream. In this case, a malfunction might occur in decryption of the image.
According to this embodiment, inserting dummy bytes prevents such a specific code from coming up.

This embodiment has described so far the apparatus and method which encrypt data compressed by the motion picture encoding method which performs intra-frame prediction and interframe prediction, which apparatus and method being the motion picture encryption apparatus and motion picture encryption method which encrypt a part of motion picture data including the leading data of the encoded picture data main body in the picture data packet that has been encoded and formed.

This embodiment has also described the motion picture encryption apparatus and motion picture encryption method which insert dummy information at the start position and end position of the encrypted data, and in between the encrypted data with constant intervals.

This embodiment has also described that data encoded by the motion picture encoding method which performs intra-frame prediction and interframe prediction is data that has been compressed by MPEG-4 AVC/H.264.

This embodiment has also described the motion picture encryption apparatus and motion picture encryption method which add header information to information necessary for decryption, and insert dummy information in the header-information-added information necessary for decryption with constant intervals.

This embodiment has also described the motion picture encryption apparatus and motion picture encryption method which embed dummy-information-inserted data in a motion picture stream.

This embodiment has also described the motion picture encryption apparatus and motion picture encryption method which decrypt a part of motion picture data including the leading data of the encoded encrypted picture data main body in the encrypted picture data packet that has been encoded and formed.

This embodiment has also described the motion picture encryption apparatus and motion picture encryption method which, when dummy information is inserted in decryption target data, remove the dummy information from the decryption target data.

This embodiment has also described the motion picture encryption apparatus and motion picture encryption method which acquire dummy-information-inserted data from a motion picture stream, remove the dummy information, and acquire information necessary for decryption.

### Embodiment 2.

According to the first embodiment, the size and position of data to be encrypted, the encryption algorithm, and the like must be fixed between the encryption apparatus and decryption apparatus.
According to the second embodiment, the size and position of the data to be encrypted, and the like are variable.

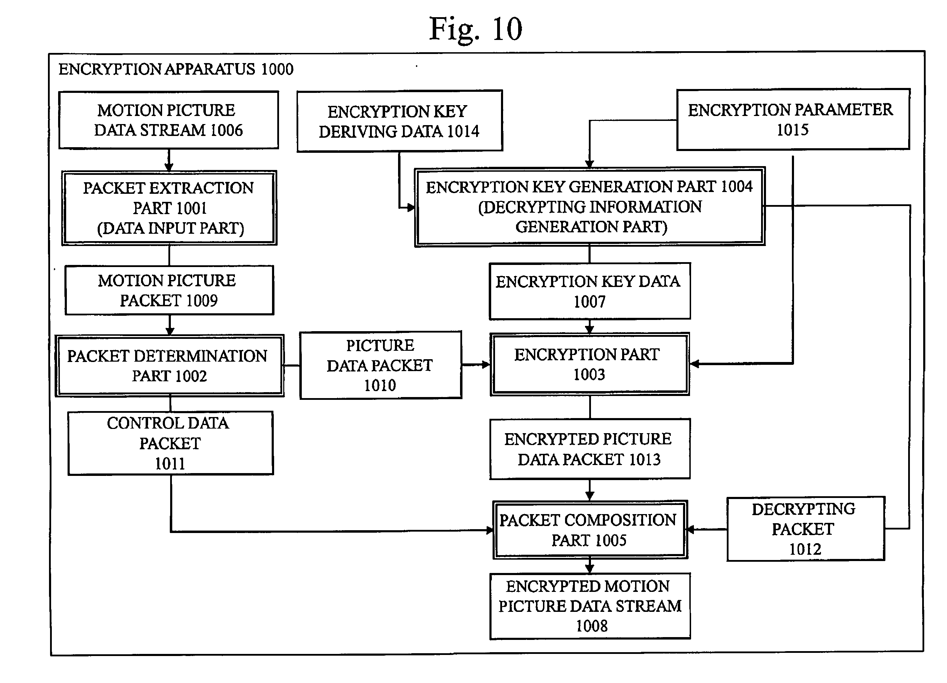

Fig. 10 is a block diagram showing a configuration of an encryption apparatus 1000 according to this embodiment.
In this embodiment, a description will be given in view of H.264, but the encryption apparatus 1000 according to this embodiment is also applicable to other encoding methods having similar characteristics.

Referring to Fig. 10, the operations of a packet extraction part 1001, packet determination part 1002, and packet composition part 1005 are identical to those of the packet extraction part 101, packet determination part 102, and packet composition part 105 described in the first embodiment.

An encryption key generation part 1004 inputs an encryption parameter 1015 in addition to encryption key deriving data 1014.
The encryption key deriving data 1014 is identical to the encryption key deriving data 114 described in the first embodiment. The encryption parameter 1015 is information indicating the size and position of data to be encrypted, and the encryption algorithm. By using the encryption parameter 1015, the size and position of data to be encrypted, and the encryption algorithm can be variable.
The encryption key generation part 1004 is an example of a decrypting information generation part.

An encryption part 1003 inputs a picture data packet 1010, encryption key data 1007, and the encryption parameter 1015.
As described above, the encryption parameter 1015 includes the size and position of data to be encrypted, information on the encryption algorithm to be employed, and the like. Hence, the encryption part 1003 performs encryption based on the data size, data position, and encryption algorithm indicated by the encryption parameter.
For example, the encryption part 1003 sets the data size (n byte) of the leading data of the encryption-target I slice data to be the data size indicated by the encryption parameter 1015. The encryption part 1003 performs encryption using the encryption algorithm indicated by the encryption parameter 1015.

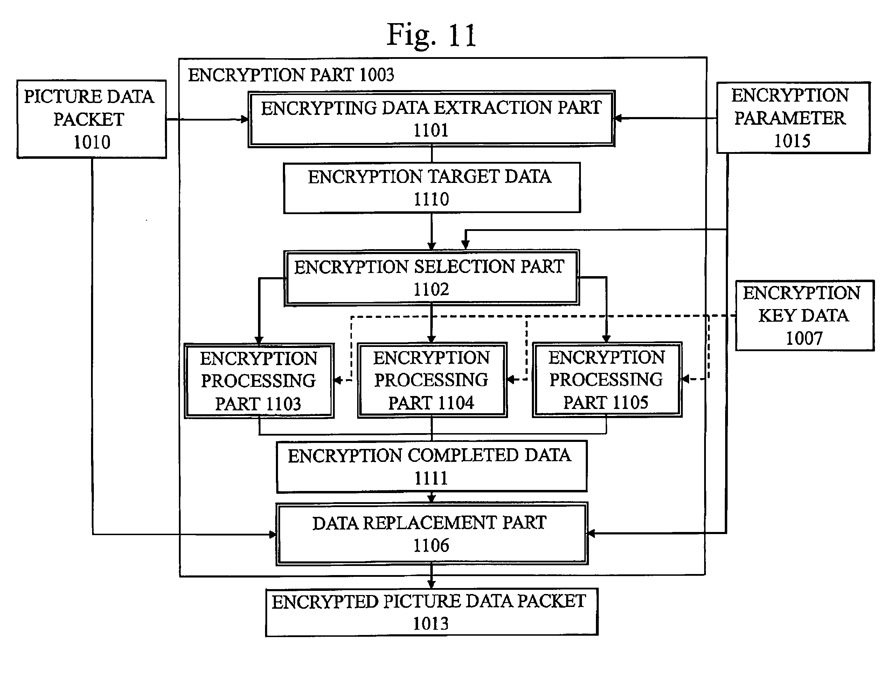

Fig. 11 shows a configuration of the encryption part 1003 according to this embodiment.

An encrypting data extraction part 1101 obtains information on the size and position of the data to be encrypted from the encryption parameter 1015.
In accordance with the information obtained from the encryption parameter 1015, the encrypting data extraction part 1101 extracts the data to be encrypted from the picture data packet 1010, and treats the extracted data as encryption target data 1110.
An encryption selection part 1102 obtains the information on the encryption algorithm to be employed from the encryption parameter 1015, and assigns the encryption target data to corresponding one of encryption processing parts 1103 to 1105.
Although Fig. 11 shows a case of three encryption processing parts, the number of encryption processing parts can be arbitrary. The three encryption processing parts shown in Fig. 11 respectively correspond to different encryption algorithms.
The encryption processing parts 1103 to 1103 encrypt the assigned encryption target data 1110 by using the encryption key data 1007, and generate encryption completed data 1111.
A data replacement part 1106 obtains information on the size and position of the data to be decrypted from the encryption parameter 1015.
In accordance with the information obtained from the encryption parameter 1015, the data replacement part 1106 replaces the corresponding data of the picture data packet 1010 with the encryption completed data 1111, and generates an encrypted picture data packet 1013.
Note that during the replacement, the data replacement part 1106 may insert dummy data at the start position and end position of the encryption completed data 1111, and in between the encryption completed data 1111 with constant intervals, in the same manner as in the first embodiment. This can prevent an encrypted text from including a specific code (e.g., a status code) of the image data stream.

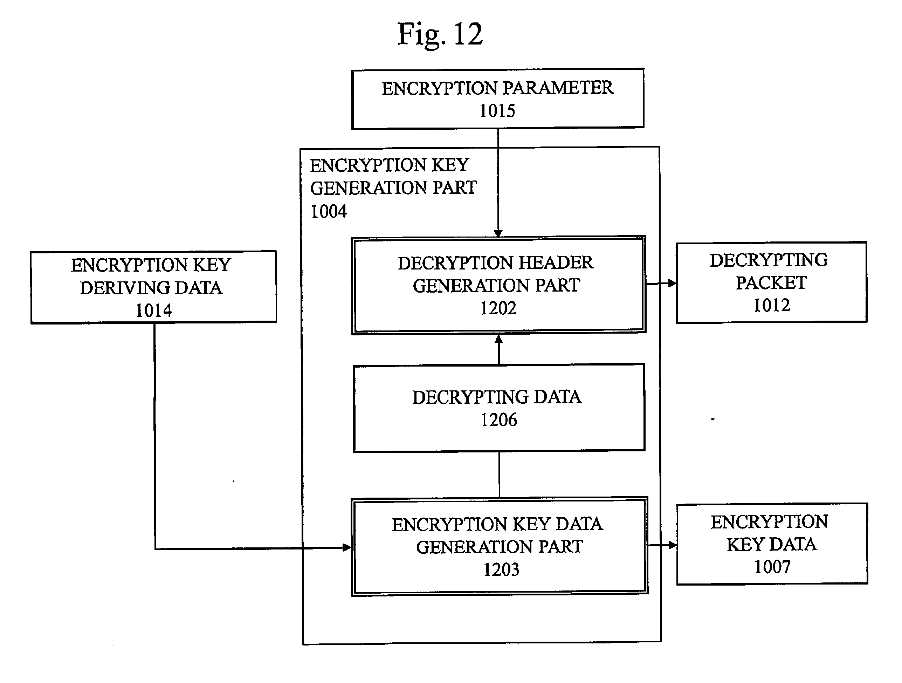

Fig. 12 shows the operation of the encryption key generation part 1004 shown in Fig. 10.

An encryption key data generation part 1203 generates the encryption key data 1007 out of the encryption key deriving data 1014.
Assume that to generate the encryption key data 1007 out of the encryption key deriving data 1014 is easy while to derive the encryption key deriving data 1014 from the encryption key data 1007 is difficult.
The encryption key data generation part 1203 outputs decrypting data 1206.
Note that the decrypting data 1206 does not include the main body of the encryption key deriving data 1014.
However, the decrypting data 306 has an information amount sufficient for generating decryption key data 1412 (to be described later) out of the decrypting data 1206 and decryption key deriving data 1414 (to be described later).
A decryption header generation part 1202 inputs the decrypting data 1206 and encryption parameter 1015 and generates a decrypting packet 1204.

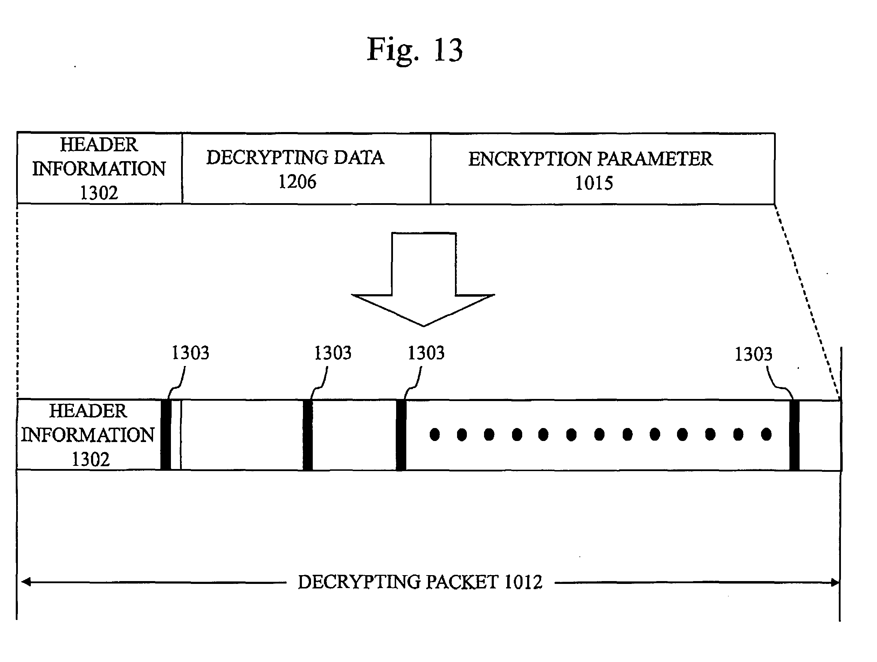

Fig. 13 shows how the decrypting packet is generated.
The decryption header generation part 1202 connects decrypting data 1206 and encryption parameter 1015 to header information 1302.
The decryption header generation part 1202 also inserts dummy data 1303 in the connected information with constant intervals.
In a case of H.264, a 1-byte code other than 0x00 and 0x01 is inserted as the dummy data.
The decryption header generation part 1202 outputs the dummy-data-inserted data as the decrypting packet 1012.

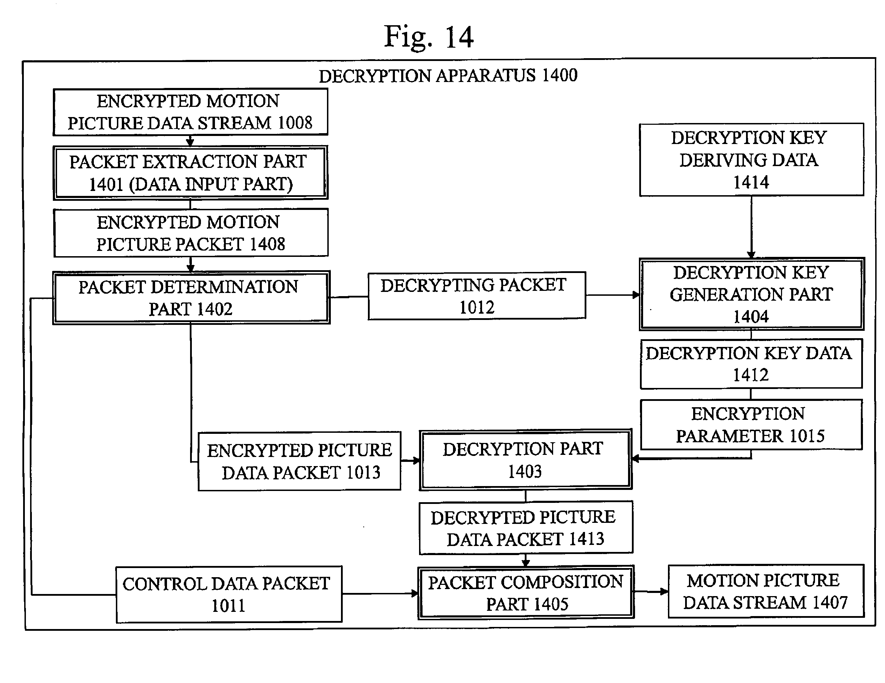

Fig. 14 shows a configuration of a decryption apparatus 1400 which decrypts the encrypted motion picture stream generated in Fig. 9.
The operations of a packet extraction part 1401, packet determination part 1402, and packet composition part 1405 are the same as those of the packet extraction part 501, packet determination part 502, and packet composition part 505 described in the first embodiment.
A decryption key generation part 1404 generates decryption key data 1412 and the encryption parameter 1015 out of a decrypting packet 1012 and the decryption key deriving data 1414.
A decryption part 1403 decrypts an encrypted picture data packet 1409 by using the decryption key data 1412 and encryption parameter 1015, and generates a decrypted picture data packet 1413.
According to this embodiment, the decryption part 1403 decrypts encrypted data based on the data size, data position, and encryption algorithm indicated by the encryption parameter.
For example, the decryption part 1403 sets the data size (n byte) of the leading data of the encryption-target I slice data to be the data size indicated by the encryption parameter 1015. The decryption part 1403 performs decryption using the encryption algorithm indicated by the encryption parameter 1015.

Referring to Fig. 14, when the decryption process is to be performed by combination with a motion picture decoder, the packet composition part 1405 may be omitted. In this case, the decrypted picture data packet 1413 and a control data packet 1011 are provided to the motion picture decoder.

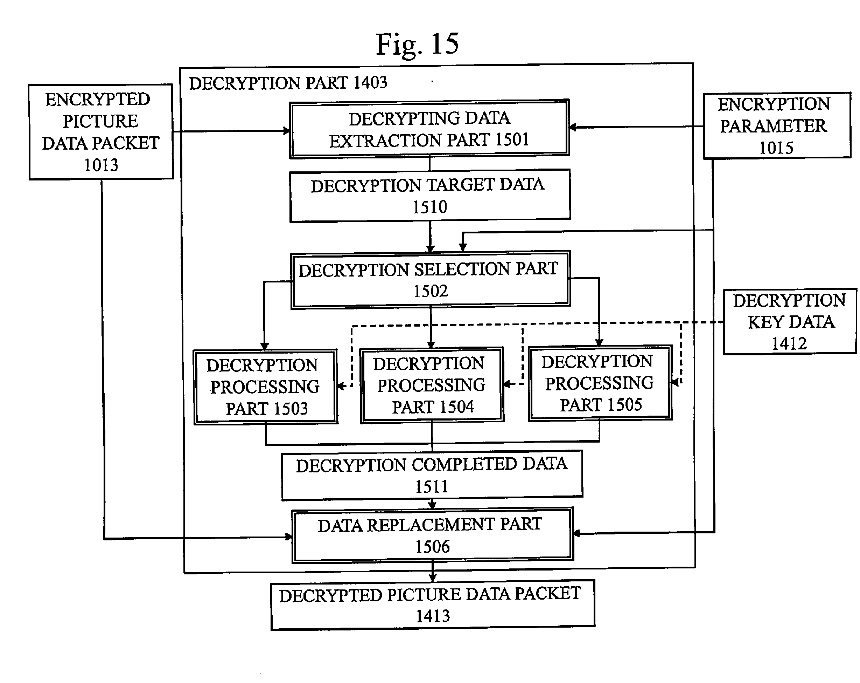

Fig. 15 shows a configuration of the decryption part 1403.

A decrypting data extraction part 1501 obtains information on the size and position of data to be decrypted from the encryption parameter 1015.
In accordance with the obtained information, the decrypting data extraction part 1501 extracts the data to be decrypted from the encrypted picture data packet 1013, and treats the extracted data as decryption target data 1050.
If the decryption target data 1510 includes dummy data, the decrypting data extraction part 1501 removes the dummy data from the decryption target data 1510 as with the first embodiment.
A decryption selection part 1502 obtains the encryption algorithm information to be employed from the encryption parameter 1015, and assigns the decryption target data to corresponding one of decryption processing parts 1503 to 1505.
Although Fig. 15 shows a case of three decryption processing parts, the number of decryption processing parts can be arbitrary. The three decryption processing parts shown in Fig. 15 respectively correspond to different encryption algorithms.
The decryption processing parts 1503 to 1503 decrypt the assigned decryption target data 1510 by using the decryption key data 1412, and generate decryption completed data 1511.
A data replacement part 1506 obtains information on the size and position of the data to be decrypted from the encryption parameter 1015.
In accordance with the information obtained from the encryption parameter 1015, the data replacement part 1506 replaces the corresponding data of the encrypted picture data packet 1013 with the decryption completed data 1511, and generates a decrypted picture data packet 1413.

According to this embodiment, information on the size and position of the data to be encrypted, the encryption algorithm, and the like are determined by the encryption apparatus, and are supplied to the decryption apparatus as the encryption parameter.
If the encryption algorithm should include a defect, the encryption algorithm can be changed. As the size of the data to be encrypted is variable, the system can be operated in accordance with the security level.

So far, this embodiment has described the motion picture encryption apparatus and motion picture encryption method that can change the size and position of the data to be encrypted and the encryption algorithm to be employed in accordance with a parameter.

This embodiment has also described the motion picture decryption apparatus and motion picture decryption method that can change the size and position of the data to be decrypted and the decryption algorithm to be employed in accordance with a parameter.

Finally, a hardware configuration of the encryption apparatus 100, decryption apparatus 500, encryption apparatus 1000 and decryption apparatus 1400 (to be referred to as "the encryption apparatus 100 and the like" hereinafter) described in the first and second embodiments will be described.

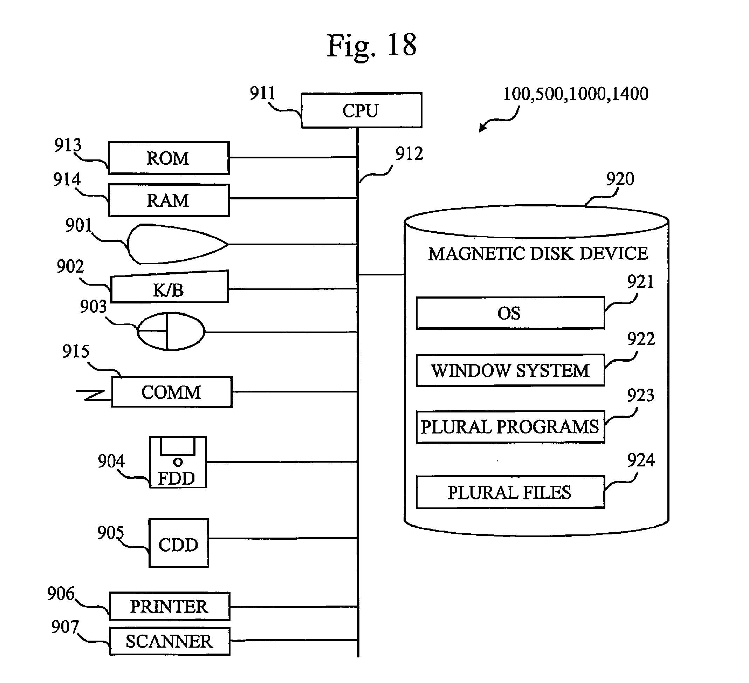

Fig. 18 is a diagram showing an example of hardware resources of the encryption apparatus 100 and the like shown in the first and second embodiments.
Note that the configuration of Fig. 18 is merely an example of the hardware configuration of the encryption apparatus 100 and the like. The hardware configuration of the encryption apparatus 100 and the like is not limited to that shown in Fig. 18, but the encryption apparatus 100 and the like can have any other configuration.

Referring to Fig. 18, the encryption apparatus 100 and the like are equipped with a CPU 911 (also referred to as a Central Processing Unit, central processing device, processing device, computation device, microprocessor, microcomputer, or processor) that executes programs.
The CPU 911 is connected to, e.g., a ROM (Read Only Memory) 913, RAM (Random Access Memory) 914, communication board 915, display 901, keyboard 902, mouse 903, and magnetic disk device 920 via a bus 912, and controls these hardware devices.
Furthermore, the CPU 911 may be connected to an FDD 904 (Flexible Disk Drive), compact disk device 905 (CDD), printer device 906, and scanner device 907.
In place of the magnetic disk device 920, a storage device such as an optical disk device or memory card (registered trademark) reader/writer device may be employed.
The RAM 914 is an example of a volatile memory. The storage media of the ROM 913, FDD 904, CDD 905, and magnetic disk device 920
are examples of a nonvolatile memory. These devices are examples of the storage device.
The communication board 915, keyboard 902, mouse 903, scanner device 907, FDD 904, and the like are examples of an input device.
The communication board 915, display 901, printer device 906, and the like are examples of an output device.

The communication board 915 is connected to a network. For example, the communication board 915 may be connected to a LAN (Local Area Network), the Internet, or a WAN (Wide Area Network).

The magnetic disk device 920 stores an operating system 921 (OS), window system 922, a plural programs 923, and a plural files 924.
The CPU 911 executes the program of the plural programs 923 by utilizing the operating system 921 and window system 922.

The RAM 914 temporarily stores at least a part of the program of the operating system 921 and application programs which are to be executed by the CPU 911.
The RAM 914 stores various types of data necessary for the process done by the CPU 911.

The ROM 913 stores the BIOS (Basic Input Output System) program, and the magnetic disk device 920 stores the boot program.
When starting the encryption apparatus 100 and the like, the BIOS program of the ROM 913 and the boot program of the magnetic disk device 920 are executed, and the BIOS program and boot program start the operating system 921.

The plural programs 923 store programs that execute functions described as "parts" in the description of the first and second embodiments. The programs are read and executed by the CPU 911.

The plural files 924 store information, data, signal values, variable values, and parameters indicating the results of the processes described as "determination", "calculation", "comparison", "extraction", "alteration", "setting ", "separation", "selection", and the like in the description of the first and second embodiments, as the items of "files" and "databases".
The "files" and "databases" are stored in a recording medium such as a disk or memory. The information, data, signal values, variable values, and parameters stored in the storage medium such as a disk and memory are read out to the main memory or cache memory by the CPU 911 through a read/write circuit, and are used for the operations of the CPU such as extraction, retrieval, look-up, comparison, computation, calculation, process, edit, output, print, and display.
During the operations of the CPU such as extraction, retrieval, look-up, comparison, computation, calculation, process, edit, output, print, and display, the information, data, signal values, variable values, and parameters are temporarily stored in the main memory, register, cache memory, buffer memory, or the like.
The arrows between the function blocks described in the first and second embodiments mainly indicate input/output of data and signals. The data and signal values are stored in a recording medium such as the memory of the RAM 914, the flexible disk of the FDD 904, the compact disk of the CDD 905, or the magnetic disk of the magnetic disk device 920; or an optical disk, mini disk, or DVD. The data and signals are transferred online via the bus 912, signal lines, cables, and other transmission media.

The "part" in the first and second embodiments may be a "circuit", "device" or "apparatus"; or a "step", "procedure", or "process". Namely, the "part" may be realized by the firmware stored in the ROM 913. Alternatively, the "part" may be practiced by only software; by only hardware such as an element, a device, a substrate, or a wiring line; by a combination of software and hardware; or furthermore by a combination of software and firmware. The firmware and software are stored as programs in a recording medium such as a magnetic disk, flexible disk, optical disk, compact disk, mini disk, or DVD. The programs are read by the CPU 911 and executed by the CPU 911. In other words, the programs serve as the "parts" in the first and second embodiments 1 and 2 to cause the computer to function. Alternatively, the programs serve to cause the computer to execute the procedures and methods of the "parts" in the first and second embodiments.

In this manner, the encryption apparatus 100 and the like shown in the first and second embodiments are computers each provided with a CPU being a processing device; a memory, magnetic disk, or the like being a storage device; a keyboard, mouse, communication board, or the like being an input device; and a display, communication board, or the like being an output device, which realize the functions described as the "parts" by using these processing device, storage device, input device, and output device, as described above.

### Brief Description of Drawings

[Fig. 1] is a diagram showing a configuration example of an encryption apparatus according to the first embodiment.

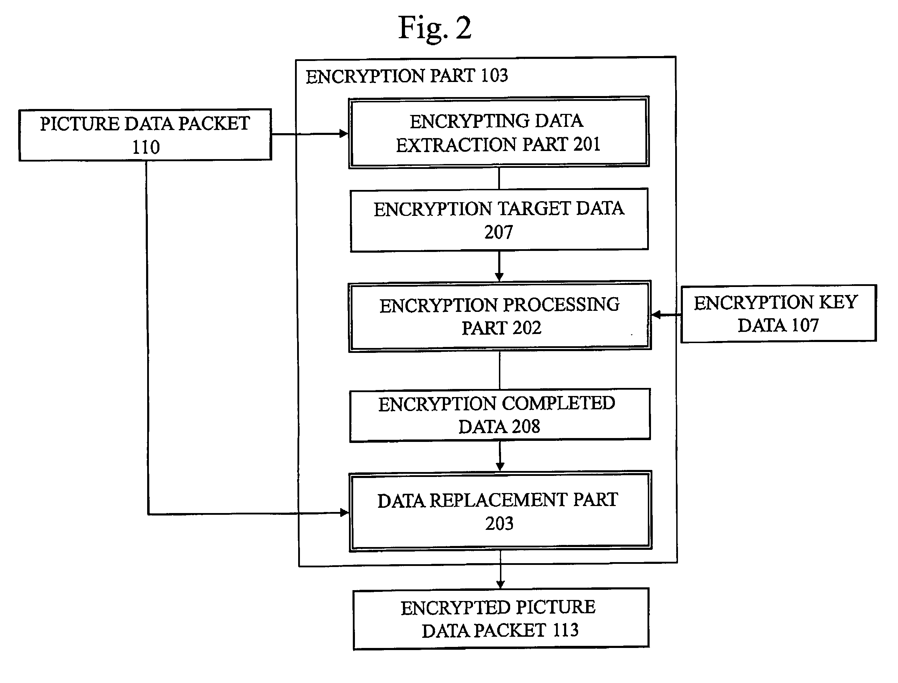

[Fig. 2] is a diagram showing a configuration example of an encryption part according to the first embodiment.
[Fig. 3] is a diagram showing a configuration example of an encryption key generation part according to the first embodiment.
[Fig. 4] is a diagram showing an example of insertion of dummy data into a decrypting packet according to the first embodiment.
[Fig. 5] is a diagram showing a configuration example of a decryption apparatus according to the first embodiment.
[Fig. 6] is a diagram showing a configuration example of a decryption part according to the first embodiment.
[Fig. 7] is a diagram showing a configuration example of a decryption key generation part according to the first embodiment.
[Fig. 8] is a diagram showing an example of insertion of dummy data into an encryption completed data according to the first embodiment.
[Fig. 9] is a diagram showing an example of encryption of macro blocks according to the first embodiment.
[Fig. 10] is a diagram showing a configuration example of an encryption apparatus according to the second embodiment.
[Fig. 11] is a diagram showing a configuration example of an encryption part according to the second embodiment.
[Fig. 12] is a diagram showing a configuration example of an encryption key generation part according to the second embodiment.
[Fig. 13] is a diagram showing an example of insertion of dummy data into a decrypting packet according to the second embodiment.
[Fig. 14] is a diagram showing a configuration example of a decryption apparatus according to the second embodiment.
[Fig. 15] is a diagram showing a configuration example of a decryption part according to the second embodiment.
[Fig. 16] is a diagram showing an example of a motion picture stream before encryption according to the first embodiment.
[Fig. 17] is a diagram showing an example of a motion picture stream after encryption according to the second embodiment.
[Fig. 18] is a diagram showing a hardware configuration example of an encryption apparatus and decryption apparatus according to the first and second embodiments.

### Reference Signs List

100 encryption apparatus, 101 packet extraction part, 102 packet determination part, 103 encryption part, 104 encryption key generation part, 105 packet composition part, 106 motion picture data stream, 107 encryption key data, 108 encrypted motion picture data stream, 109 motion picture packet, 110 picture data packet, 111 control data packet, 112 decrypting packet, 113 encrypted picture data packet, 114 encryption key deriving data, 201 encrypting data extraction part, 202 encryption processing part, 203 data replacement part, 207 encryption target data, 208 encryption completed data, 209 dummy data, 302 decryption header generation part, 303 encryption key data generation part, 306 decrypting data, 402 header information, 403 dummy data, 500 decryption apparatus, 501 packet extraction part, 502 packet determination part, 503 decryption part, 504 decryption key generation part, 505 packet composition part, 507 motion picture data stream, 508 encrypted motion picture packet, 512 decryption key data, 513 3 decrypted picture data packet, 514 decryption key deriving data, 601 decrypting data extraction part, 602 decryption processing part, 603 data replacement part, 607 decryption target data, 608 decryption completed data, 702 decrypting data extraction part, 703 decryption key data generation part, 1000 encryption apparatus, 1001 packet extraction part, 1002 packet determination part, 1003 encryption part, 1004 encryption key generation part, 1005 packet composition part, 1006 motion picture data stream, 1007 encryption key data, 1008 encrypted motion picture data stream, 1009 motion picture packet, 1010 picture data packet, 1011 control data packet, 1012 decrypting packet, 1013 encrypted picture data packet, 1014 encryption key deriving data, 1015 encryption parameter, 1101 encrypting data extraction part, 1102 encryption selection part, 1103 encryption processing part, 1104 encryption processing part, 1105 encryption processing part, 1106 data replacement part, 1110 encryption target data, 1111 encryption completed data, 1202 decryption header generation part, 1203 encryption key data generation part, 1206 decrypting data, 1302 header information,
1303 dummy data, 1400 decryption apparatus, 1401 packet extraction part, 1402 packet determination part, 1403 decryption part, 1404 decryption key generation part, 1405 packet composition part, 1407 motion picture data stream, 1408 encrypted motion picture packet, 1412 decryption key data, 1413 decrypted picture data packet, 1414 decryption key deriving data, 1501 decrypting data extraction part, 1502 decryption selection part, 1503 decryption processing part, 1504 decryption processing part, 1505 decryption processing part, 1506 data replacement part, 1510 decryption target data, 1511 decryption completed data

## Claims

1. An encryption apparatus comprising:
a data input part that inputs compression encoded data which has been compression encoded and a processing on which starts from a leading portion of the data at a time of data decompression; and
an encryption part that separates leading data from the compression encoded data input by the data input part, and encrypts the leading data.

2. The encryption apparatus according to Claim 1,
wherein the data input part inputs intra-frame prediction compression encoded data, and
wherein the encryption part separates leading data from the intra-frame prediction compression encoded data input by the data input part, and encrypts the leading data.

3. The encryption apparatus according to Claim 2,
wherein the data input part inputs interframe prediction compression encoded data, and
wherein the encryption part separates leading data from the interframe prediction compression encoded data input by the data input part, and encrypts the leading data.

4. The encryption apparatus according to Claim 1,
wherein the encryption part sets a data size of the leading data to be sufficiently small compared to a data size of the whole of the compression encoded data.

5. The encryption apparatus according to Claim 1,
wherein the encryption part
performs encryption by treating a predetermined number of bytes as a processing unit, and
sets a data size of the leading data to match the processing unit.

6. The encryption apparatus according to Claim 1,
wherein the encryption part separates data being a part of the compression encoded data, in addition to the leading data, and encrypts the data separated.

7. The encryption apparatus according to Claim 6,
wherein the encryption part can change at least either one of a position and size of data which is to be encrypted.

8. The encryption apparatus according to Claim 1,
wherein the encryption part
conforms to a plurality of types of encryption algorithms, and
performs encryption in accordance with an encryption algorithm specified for the compression encoded data input by the data input part.

9. The encryption apparatus according to Claim 1,
wherein the encryption part inserts dummy data in the data that has been encrypted.

10. The encryption apparatus according to Claim 1, further comprising
a decrypting information generation part that generates decrypting information used for decrypting the data encrypted by the encryption part, and inserts dummy data in the decrypting information generated.

11. A decryption apparatus comprising:
a data input part that inputs compression encoded data which has been compression encoded and whose leading data has been encrypted, and
a decryption part that separates the leading data from the compression encoded data input by the data input part, and decrypts the leading data.

12. The decryption apparatus according to Claim 11,
wherein the data input part inputs intra-frame prediction compression encoded data whose leading data has been encrypted, and
wherein the decryption part separates the leading data from the intra-frame prediction compression encoded data input by the data input part, and decrypts the leading data.

13. The decryption apparatus according to Claim 12,
wherein the data input part inputs interframe prediction compression encoded data whose leading data has been encrypted, and
wherein the encryption part separates the leading data from the interframe prediction compression encoded data input by the data input part, and encrypts the leading data.

14. An encryption method comprising:
inputting compression encoded data which has been compression encoded and a processing on which starts from a leading portion of the data at a time of data decompression, and
separating leading data from the compression encoded data which is input, and encrypting the leading data
by a computer.

15. A decryption method comprising:
inputting compression encoded data which has been compression encoded and whose leading data has been encrypted, and
separating the leading data from the compression encoded data which is input, and decrypting the leading data
by a computer.
